# EUROPEAN PATENT APPLICATION

(11) **EP 4 847 345 A1**
(43) Veröffentlichungstag der Anmeldung: **02.12.2026**
(21) Anmeldenummer: 24919843.3
(22) Anmeldetag: 04.11.2024
(51) Int. Cl.: B62D 5/04, H02P 25/22

(54) **SELBSTTESTSTEUERUNGSVERFAHREN FÜR PHASENABSCHALTVORRICHTUNG**

(30) Priorität: 25.01.2024 CN 202410110599
(71) Anmelder: Schaeffler Technologies AG & Co. KG, 91074 Herzogenaurach (DE)
(72) Erfinder: FANG, Yuyan, Shanghai 201804 (CN)
(74) Vertreter: Schaeffler Technologies
(86) Internationale Anmeldenummer: PCT/CN2024/129571
(87) Internationale Veröffentlichungsnummer: WO 2025/156763

(57) **Zusammenfassung**

Die Erfindung betrifft ein Selbsttest-Steuerverfahren für einen Phasen-Trennschalter (200), das auf ein doppelt redundantes elektrisches Servolenkungssystem (100) in einem Fahrzeug anwendbar ist, wobei das doppelt redundante elektrische Servolenkungssystem (100) eine erste Motorwicklung (130) und eine zweite Motorwicklung (140) umfasst. Das Selbsttest-Steuerverfahren für den Phasen-Trennschalter (200) umfasst: einen Koordinationsschritt (210), bei dem die erste Motorwicklung (130) und die zweite Motorwicklung (140) derart koordiniert angesteuert werden, dass das Gesamtausgangsdrehmoment der ersten Motorwicklung (130) und der zweiten Motorwicklung (140) null ist; und einen Selbstprüfungsschritt (220) für den Phasen-Trennschalter, bei dem die Phasen-Trennschalter (PD1, PD2) der einzelnen Phasen der ersten Motorwicklung (130) und der zweiten Motorwicklung (140) gesteuert werden, um auf der Grundlage der jeweiligen Phasenstromwerte eine Selbstprüfung des Phasen-Trennschalters (PD1, PD2) durchzuführen.

## Beschreibung

### Querverweis auf verwandte Anmeldungen

Die vorliegende Anmeldung beansprucht die Priorität der am 25. Januar 2024 einge-reichten chinesischen Patentanmeldung Nr. 202410110599.8 mit dem Titel "Selbst-test-Steuerverfahren für einen Phasen-Trennschalter", deren gesamter Inhalt durch Bezugnahme in die vorliegende Anmeldung aufgenommen wird.

### Technisches Gebiet

Die vorliegende Erfindung betrifft das Gebiet der Fahrzeugsteuerung und insbesondere ein Selbsttest-Steuerverfahren für einen Phasen-Trennschalter.

### Hintergrund

Derzeit werden in Fahrzeugen häufig doppelt redundante elektrische Servolenkungs-systeme eingesetzt, um das vom Fahrer eingebrachte axiale Lenkmoment mittels eines Motors zu unterstützen. Beispielsweise offenbart die Patentanmeldung CN 109843701A ein doppelt redundantes elektrisches Servolenkungssystem. In einem solchen System steuern zwei Sätze von Steuereinheiten zwei Sätze von Motorwicklungen jeweils unabhängig, um jeweils ein Unterstützungsdrehmoment zu erzeugen. Die beiden Sätze von Steuereinheiten umfassen jeweils eine Mikrocontroller-Einheit (Microcontroller Unit, MCU), eine Treiberschaltung, eine Wechselrichterbrücke sowie einen Phasen-Trennschalter zum Verbinden des Motors mit dem Steuergerät; der Phasen-Trennschalter kann auch als Phasenöffner/-schließer oder Phasenrelais bezeichnet werden. Die beiden Motorwicklungen sind zwei dreiphasige Ankerwicklungen eines Permanentmagnet-Synchronmotors (Permanent Magnet Synchronous Motor, PMSM) und sind in ihrem Aufbau im Wesentlichen gleich.

In Lenksystemen wird der Phasen-Trennschalter üblicherweise durch ein MOSFET-Schaltbauelement (Metal-Oxide-Semiconductor Field Effect Transistor) realisiert. Jede Phase jeder dreiphasigen Motorwicklung ist über einen MOSFET mit einer Steuereinheit verbunden.

Wird ein herkömmliches Selbsttestverfahren für Schaltbauelemente auf den Selbsttest eines in einem elektrischen Servolenkungssystem eingesetzten Phasen-Trennschalters angewendet, kann der konkrete Ablauf beispielsweise Folgendes umfassen: Anlegen einer bestimmten Spannung an den Phasen-Trennschalter und an-schließendes Ausgeben eines Abschaltbefehls, um zu detektieren, ob Strom vorhanden ist; wenn Strom fließt, liegt beim Phasen-Trennschalter ein Kurzschluss vor, und er kann nicht in den abgeschalteten Zustand überführt werden. Alternativ wird ein Schließbefehl ausgegeben, um zu detektieren, ob Strom vorhanden ist; wenn kein Strom fließt, liegt beim Phasen-Trennschalter eine Unterbrechung vor, und er kann nicht geschlossen werden.

Während eines solchen Selbsttests fließt Strom, wenn der Phasen-Trennschalter geschlossen ist. Da der Phasen-Trennschalter mit dem Motor verbunden ist, fließt der Strom durch die Motorwicklungen und erzeugt ein Drehmoment, wodurch sich der Motor dreht. Im Kontext einer elektrischen Servolenkung liegt während des Selbsttests des Phasen-Trennschalters jedoch keine Drehmomentanforderung vor; der Motor soll kein Drehmoment erzeugen und im Stillstand verbleiben. Solche unerwünschten Drehmomente und Motorbewegungen entsprechen nicht den Konstruktions- und Sicherheitsanforderungen und können sogar eine unbeabsichtigte Lenkradbewegung verursachen.

Um solche unerwünschten Drehmomente und Motorbewegungen zu vermeiden, wurde herkömmlich versucht, die beim Selbsttest angelegte Spannung so weit zu reduzieren, dass das erzeugte Drehmoment die innere Reibung des Motors nicht mehr überwindet. Dadurch bleibt der Motor zwar stehen, jedoch wird zugleich der Strom stark reduziert, sodass sich die Stromwerte im abgeschalteten und im geschlossenen Zustand des Phasen-Trennschalters kaum noch unterscheiden. Dies erschwert die Erkennung des Leitungszustands des Phasen-Trennschalters anhand des Stroms erheblich. Mit anderen Worten wird zwar der Stillstand des Motors erreicht, jedoch auf Kosten der Wirksamkeit der Selbsttestfunktion.

Es besteht daher Bedarf an einem Selbsttest-Steuerverfahren für einen Phasen-Trennschalter, das in einem doppelt redundanten System oder einem System mit zwei Steuereinheiten während des Selbsttests ein drehmomentfreies Verhalten des Motors gewährleistet, beispielsweise in einem doppelt redundanten elektrischen Servolenkungssystem, insbesondere bei Verwendung eines sechspoligen Permanentmagnet-Synchronmotors oder zweier dreiphasiger Permanentmagnet-Synchronmotoren.

### Zusammenfassung der Erfindung

Ausführungsformen der vorliegenden Offenbarung stellen ein Selbsttest-Steuerverfahren für einen Phasen-Trennschalter bereit, das unerwünschte Drehmomente und Motorbewegungen vermeidet, die bei Anwendung herkömmlicher Selbsttestverfahren für Schaltbauelemente auf Phasen-Trennschalter in elektrischen Servolenkungssystemen auftreten.

Das Verfahren ist auf ein doppelt redundantes elektrisches Servolenkungssystem in einem Fahrzeug anwendbar. Das doppelt redundante elektrische Servolenkungssystem umfasst eine erste Motorwicklung und eine zweite Motorwicklung. Das Verfahren umfasst: einen Koordinationsschritt, bei dem die erste Motorwicklung und die zweite Motorwicklung derart koordiniert angesteuert werden, dass das Gesamtausgangsdrehmoment der ersten Motorwicklung und der zweiten Motorwicklung null ist; und einen Selbstprüfungsschritt für den Phasen-Trennschalter, bei dem die Phasen-Trennschalter jeder Phase der ersten Motorwicklung und der zweiten Motorwicklung so angesteuert werden, dass auf der Grundlage der jeweiligen Phasenstromwerte eine Selbstprüfung durchgeführt wird.

In einigen Ausführungsformen umfasst der Koordinationsschritt ein koordiniertes Einstellen der Tastverhältnisse der ersten Motorwicklung und der zweiten Motorwicklung derart, dass das Gesamtausgangsdrehmoment der beiden Motorwicklungen null ist.

In einigen Ausführungsformen umfasst die Selbstprüfung des Phasen-Trennschalters einen Abschalt-Selbsttest und/oder einen Schließ-Selbsttest. Der Selbstprüfungsschritt für den Phasen-Trennschalter kann Folgendes umfassen: gleichzeitiges Abschalten/Schließen der Phasen-Trennschalter jeder Phase der ersten Motorwicklung und der zweiten Motorwicklung; Erfassen der Phasenstromwerte der ersten Motorwicklung und der zweiten Motorwicklung; während des Abschalt-Selbsttests für jede der ersten Motorwicklung und der zweiten Motorwicklung Feststellen, ob der größte ihrer Phasenstromwerte kleiner als ein Stromschwellenwert ist; wenn der größte Wert kleiner als der Stromschwellenwert ist, wird festgestellt, dass das Abschalten erfolgreich ist, andernfalls wird ein Abschaltfehler festgestellt; und während des Schließ-Selbsttests sequentielles Durchführen eines Schließ-Selbsttests für jede der drei Phasen der ersten Motorwicklung und der zweiten Motorwicklung, wobei die jeweils aktuell geprüfte Phase eine aktuelle Zielphase ist, und für jede der ersten Motorwicklung und der zweiten Motorwicklung Feststellen, ob der Stromwert ihrer aktuellen Zielphase größer als der Stromschwellenwert ist; wenn der Stromwert der aktuellen Zielphase größer als der Stromschwellenwert ist, wird festgestellt, dass das Schließen der aktuellen Zielphase erfolgreich ist, andernfalls wird ein Schließfehler der aktuellen Zielphase festgestellt.

In einigen Ausführungsformen umfasst während des Abschalt-Selbsttests der Koordinationsschritt: Ansteuern der ersten Motorwicklung und der zweiten Motorwicklung gemäß einem ersten Satz dreiphasiger Tastverhältnisse und Aufrechterhalten dieses Zustands über einen ersten Zeitraum, wobei der erste Satz dreiphasiger Tastverhältnisse so festgelegt ist, dass für jede Phase der ersten Motorwicklung die Summe ihres Tastverhältnisses und des Tastverhältnisses der entsprechenden Phase der zweiten Motorwicklung gleich 1 ist; und Ansteuern der ersten Motorwicklung und der zweiten Motorwicklung gemäß einem zweiten Satz dreiphasiger Tastverhältnisse und Aufrechterhalten dieses Zustands über einen zweiten Zeitraum, wobei sich der zweite Satz dreiphasiger Tastverhältnisse vom ersten Satz dreiphasiger Tastverhältnisse unterscheidet, aber weiterhin für jede Phase der ersten Motorwicklung die Bedingung erfüllt, dass die Summe ihres Tastverhältnisses und des Tastverhältnisses der entsprechenden Phase der zweiten Motorwicklung gleich 1 ist.

Der Selbstprüfungsschritt kann in diesem Fall ferner umfassen: während des ersten Zeitraums Erfassen erster Sätze von Phasenstromwerten der ersten Motorwicklung und der zweiten Motorwicklung; während des zweiten Zeitraums Erfassen zweiter Sätze von Phasenstromwerten der ersten Motorwicklung und der zweiten Motorwicklung; und für jede der ersten Motorwicklung und der zweiten Motorwicklung Bestimmen des größten Werts unter den ersten und zweiten Sätzen von Phasenstromwerten als maximalen Phasenstromwert.

In einigen Ausführungsformen umfasst während des Schließ-Selbsttests der Koordinationsschritt: Koordinieren der Tastverhältnisse der ersten Motorwicklung und der zweiten Motorwicklung derart, dass das Tastverhältnis der aktuellen Zielphase der ersten Motorwicklung x beträgt, die Tastverhältnisse der beiden anderen Phasen der ersten Motorwicklung jeweils 1-x betragen, das Tastverhältnis der aktuellen Zielphase der zweiten Motorwicklung 1-x beträgt und die Tastverhältnisse der beiden anderen Phasen der zweiten Motorwicklung jeweils x betragen, wobei 0,5<x≤0,6 gilt; Ansteuern der ersten Motorwicklung und der zweiten Motorwicklung mit den eingestellten Tastverhältnissen über einen vorbestimmten Zeitraum; und während des vorbestimmten Zeitraums Erfassen der Stromwerte der aktuellen Zielphase der ersten Motorwicklung und der zweiten Motorwicklung.

Durch die koordinierte Ansteuerung, bei der das Gesamtausgangsdrehmoment der ersten Motorwicklung und der zweiten Motorwicklung null ist, kann die Selbstprüfung durchgeführt werden, ohne unerwünschte Drehmomente oder Motorbewegungen zu erzeugen. Durch die koordinierte Einstellung der Tastverhältnisse derart, dass für jede Phase die Summe der Tastverhältnisse der beiden Wicklungen gleich 1 ist, erzeugen die Wicklungen gleich große, aber entgegengesetzt gerichtete Ströme und damit entgegengesetzte Drehmomente, die sich gegenseitig aufheben. Zusätzlich werden bei jeder Gruppenselbstprüfung abwechselnd zwei Sätze von Tastverhältnissen ausgegeben, sodass zwei der drei Phasen nacheinander ihre Stromrichtung ändern, wodurch Auslassungen beim Abschalt-Selbsttest der Phasen-Trennschalter verhindert werden.

### Kurzbeschreibung der Zeichnungen

Fig. 1 zeigt ein schematisches Blockdiagramm eines doppelt redundanten elektrischen Servolenkungssystems gemäß einer Ausführungsform der vorliegenden Offenbarung.
Fig. 2 zeigt ein schematisches Flussdiagramm eines Selbsttest-Steuerverfahrens für einen Phasen-Trennschalter gemäß einer Ausführungsform der vorliegenden Offenbarung.
Fig. 3 zeigt ein Flussdiagramm eines Abschalt-Selbsttests des Phasen-Trennschalters gemäß einer Ausführungsform der vorliegenden Offenbarung.
Fig. 4 zeigt ein Flussdiagramm eines Schließ-Selbsttests des Phasen-Trennschalters gemäß einer Ausführungsform der vorliegenden Offenbarung.
Fig. 5 zeigt ein schematisches Blockdiagramm einer in einem Fahrzeug verwendeten elektronischen Vorrichtung gemäß einer Ausführungsform der vorliegenden Offenbarung.

### Ausführliche Beschreibung

Nachfolgend werden zur Veranschaulichung zahlreiche Einzelheiten beschrieben, um ein umfassendes Verständnis der vorliegenden Offenbarung zu vermitteln. Für den Fachmann ist jedoch ersichtlich, dass die Erfindung auch ohne einen Teil dieser Einzelheiten ausgeführt werden kann. Die Ausführungsformen werden beispielhaft beschrieben, um das Verständnis der Erfindung zu erleichtern, und sind nicht auf bestimmte Konfigurationen oder Algorithmen beschränkt. Vielmehr sollen Modifikationen, Ersetzungen und Verbesserungen der hierin beschriebenen Elemente, Bauteile und Algorithmen, die innerhalb des Geistes der Erfindung liegen, von der Erfindung umfasst sein. Bekannte Strukturen und Techniken sind nicht im Detail dargestellt oder beschrieben, um die vorliegende Offenbarung nicht unnötig zu verdunkeln.

Wie hierin verwendet, kann "A ist mit B verbunden" entweder bedeuten, dass "A direkt mit B verbunden ist", oder dass "A über ein oder mehrere weitere Elemente indirekt mit B verbunden ist". Sofern nicht anders angegeben, umfasst der Ausdruck "ein" oder "eine" sowohl genau eins als auch eines oder mehrere. Der Begriff "oder" wird nicht ausschließend verwendet, sodass "A oder B" "A aber nicht B", "B aber nicht A" sowie "A und B" umfasst. In den beigefügten Ansprüchen dienen Begriffe wie "erste", "zweite" und "dritte" lediglich als Kennzeichnungen und sollen keine numerische Reihenfolge andeuten.

In doppelt redundanten elektrischen Servolenkungssystemen kann, wenn eine Gruppe von Steuereinheiten fehlerhaft arbeitet, mittels eines Phasen-Trennschalters die Verbindung zwischen dieser Steuereinheit und ihrer zugehörigen Motorwicklung getrennt werden, um die Wicklung vom elektrischen System zu isolieren, während die andere, fehlerfreie Steuereinheit weiterhin die ihr zugeordnete Wicklung antreibt, um ein Unterstützungsdrehmoment bereitzustellen. In solchen Systemen ist der Phasen-Trennschalter daher eine kritische Sicherheitskomponente, die Abschalt- und Schließbefehle der Steuereinheit präzise und rechtzeitig ausführen muss. Während der Selbstprüfung des Phasen-Trennschalters ist zu prüfen, ob das Bauteil ordnungsgemäß abschalten und schließen kann.

Wie vorstehend erläutert, können herkömmliche Selbsttestmethoden für Schaltbauelemente bei Anwendung auf Phasen-Trennschalter in elektrischen Servolenkungssystemen unerwünschte Drehmomente und Motorbewegungen verursachen. Die in den vorliegenden Ausführungsformen offenbarte Lösung vermeidet dies durch eine koordinierte Ansteuerung der beiden Motorwicklungen.

Zur Vereinfachung und ohne Beschränkung wird das vorgeschlagene Selbsttest-Steuerverfahren nachfolgend anhand eines doppelt redundanten elektrischen Servolenkungssystems beschrieben.

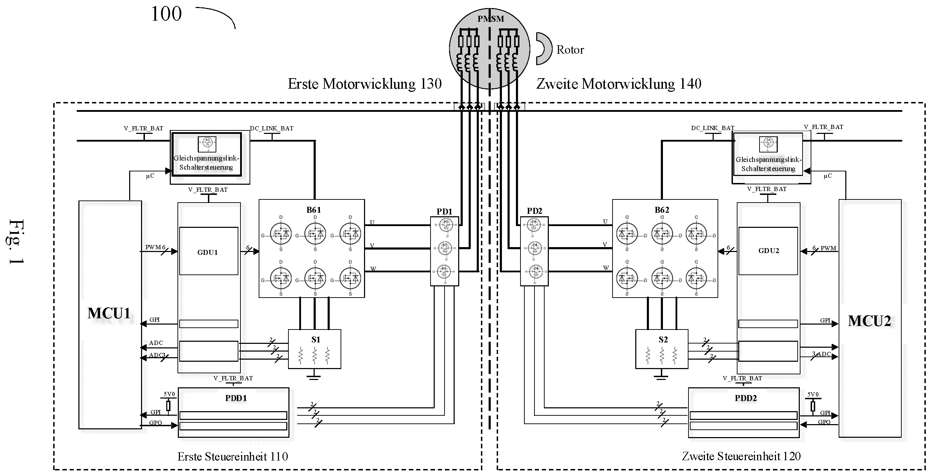

Fig. 1 zeigt ein doppelt redundantes elektrisches Servolenkungssystem 100 mit zwei im Wesentlichen gleichen Sätzen von Steuereinheiten, nämlich einer ersten Steuereinheit 110 und einer zweiten Steuereinheit 120, die jeweils unabhängig eine erste Motorwicklung 130 bzw. eine zweite Motorwicklung 140 ansteuern. Die erste Motorwicklung 130 und die zweite Motorwicklung 140 können beispielsweise zwei Wicklungen eines sechspoligen Permanentmagnet-Synchronmotors oder Wicklungen zweier dreiphasiger Permanentmagnet-Synchronmotoren sein.

Die erste Steuereinheit 110 kann eine erste Mikrocontroller-Einheit MCU1, einen ersten Gate-Treiber GDU1, ein erstes Brückenmodul B61, einen ersten Phasen-Trennschalter PD1, einen ersten Phasenstrom-Abtaster S1 und einen ersten Treiber-IC PDD1 für den Phasen-Trennschalter umfassen. Entsprechend kann die zweite Steuereinheit 120 eine zweite Mikrocontroller-Einheit MCU2, einen zweiten Gate-Treiber GDU2, ein zweites Brückenmodul B62, einen zweiten Phasen-Trennschalter PD2, einen zweiten Phasenstrom-Abtaster S2 und einen zweiten Treiber-IC PDD2 für den Phasen-Trennschalter umfassen.

Die U-, V- und W-Phasen der ersten Motorwicklung 130 werden mit U1, V1 und W1 bezeichnet, während die U-, V- und W-Phasen der zweiten Motorwicklung 140 mit U2, V2 und W2 bezeichnet werden.

Das erste Brückenmodul B61 und das zweite Brückenmodul B62 umfassen jeweils U-, V- und W-Phasen, wobei jede Phase ein oberes und ein unteres Schaltbauelement aufweist, deren Tastverhältnisse komplementär sind. Als Schaltbauelemente können beispielsweise MOSFETs, Schütze, IGBTs oder dergleichen verwendet werden.

Der erste Phasen-Trennschalter PD1 und der zweite Phasen-Trennschalter PD2 umfassen jeweils drei Schaltelemente, beispielsweise MOSFETs, Schütze oder IGBTs, die für PD1 mit PDu1, PDv1 und PDw1 und für PD2 mit PDu2, PDv2 und PDw2 bezeichnet werden.

Die erste Mikrocontroller-Einheit MCU1 sendet Steueranweisungen an den ersten Gate-Treiber GDU1, der daraufhin das erste Brückenmodul B61 ansteuert, um über den ersten Phasen-Trennschalter PD1 die U-, V- und W-Phasen U1, V1 und W1 der ersten Motorwicklung 130 zu steuern. Die zweite Mikrocontroller-Einheit MCU2 sendet Steueranweisungen an den zweiten Gate-Treiber GDU2, der daraufhin das zweite Brückenmodul B62 ansteuert, um über den zweiten Phasen-Trennschalter PD2 die U-, V- und W-Phasen U2, V2 und W2 der zweiten Motorwicklung 140 zu steuern.

Der erste Phasenstrom-Abtaster S1 erfasst eine erste Gruppe von Phasenstromwerten PCu1, PCv1 und PCw1. Der zweite Phasenstrom-Abtaster S2 erfasst eine zweite Gruppe von Phasenstromwerten PCu2, PCv2 und PCw2.

Die Selbstprüfung des Phasen-Trennschalters umfasst einen Abschalt-Selbsttest und einen Schließ-Selbsttest. Im Allgemeinen wird zunächst der Abschalt-Selbsttest und anschließend der Schließ-Selbsttest durchgeführt. Vor dem Ausführen der Selbstprüfung in dem in Fig. 1 dargestellten System sollte sichergestellt sein, dass die übrigen Komponenten ordnungsgemäß arbeiten.

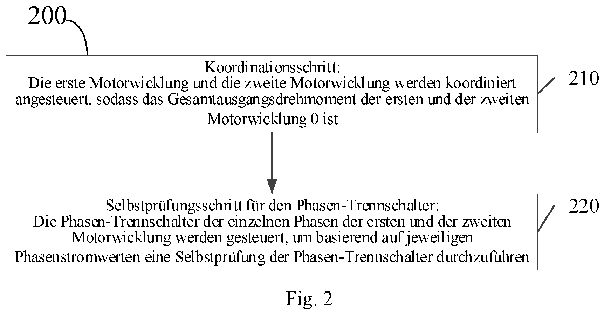

Fig. 2 zeigt ein Flussdiagramm eines Selbsttest-Steuerverfahrens 200 für einen Phasen-Trennschalter, das auf das in Fig. 1 dargestellte doppelt redundante elektrische Servolenkungssystem 100 anwendbar ist.

Das Verfahren umfasst in Block 210 einen Koordinationsschritt, bei dem die erste Motorwicklung und die zweite Motorwicklung so koordiniert angesteuert werden, dass ihr Gesamtausgangsdrehmoment null ist. In einer Implementierung kann eine übergeordnete Steuereinheit vorgesehen sein, die die erste und die zweite Steuereinheit koordiniert. In einer anderen Implementierung kann eine der beiden Steuereinheiten als Master und die andere als Slave arbeiten. In einer weiteren Implementierung sind die beiden Steuereinheiten derart koordiniert programmiert, dass die Steuerung der ersten Motorwicklung durch die erste Steuereinheit und die Steuerung der zweiten Motorwicklung durch die zweite Steuereinheit aufeinander abgestimmt erfolgen.

In einigen Ausführungsformen umfasst die koordinierte Steuerung ein koordiniertes Einstellen der Tastverhältnisse der ersten und der zweiten Motorwicklung, sodass das Gesamtausgangsdrehmoment null ist. Beispielsweise wird für jede Phase die Summe des Tastverhältnisses der Phase der ersten Wicklung und des Tastverhältnisses der entsprechenden Phase der zweiten Wicklung auf 1 eingestellt, sodass die beiden Wicklungen gleich große und entgegengesetzt gerichtete Drehmomente erzeugen, die sich gegenseitig aufheben.

In Block 220 umfasst das Verfahren einen Selbstprüfungsschritt für den Phasen-Trennschalter, bei dem die Phasen-Trennschalter jeder Phase der ersten und der zweiten Motorwicklung auf der Grundlage von Phasenstromwerten gesteuert werden. Beispielsweise werden in Fig. 1 bei einem Gesamtausgangsdrehmoment von null der erste Phasen-Trennschalter PD1 und der zweite Phasen-Trennschalter PD2 anhand der von S1 erfassten Werte PCu1, PCv1 und PCw1 sowie der von S2 erfassten Werte PCu2, PCv2 und PCw2 geprüft.

Im Allgemeinen wird zuerst der Abschalt-Selbsttest und danach der Schließ-Selbsttest durchgeführt; die Reihenfolge kann jedoch bei Bedarf umgekehrt werden.

Das Verfahren betrachtet die drei Phasen-Trennschalter jeder Wicklungsgruppe als Einheit, wodurch die Selbstprüfung vereinfacht und die Prüfzeit verkürzt wird. So werden während des Abschalt-Selbsttests beispielsweise Abschaltbefehle gleichzeitig an alle sechs Phasen-Trennschalter der beiden dreiphasigen Wicklungen ausgegeben, anstatt sie nacheinander phasenweise abzuschalten.

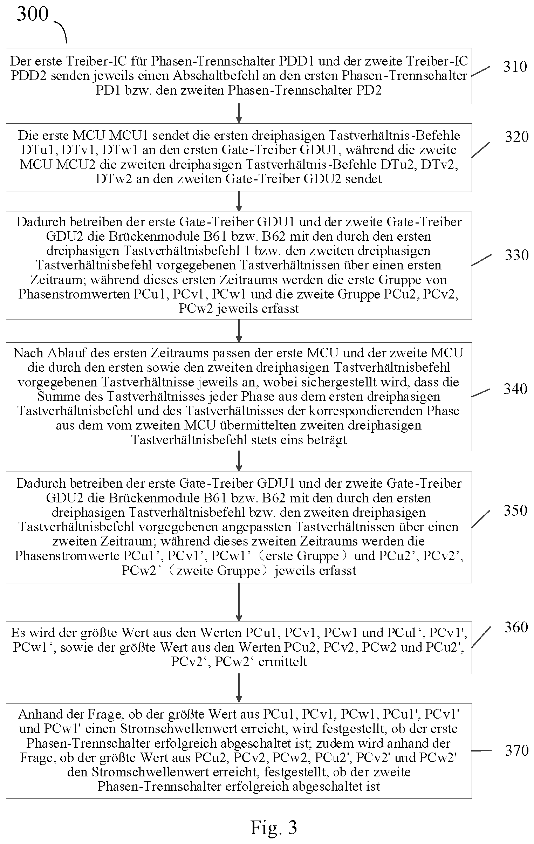

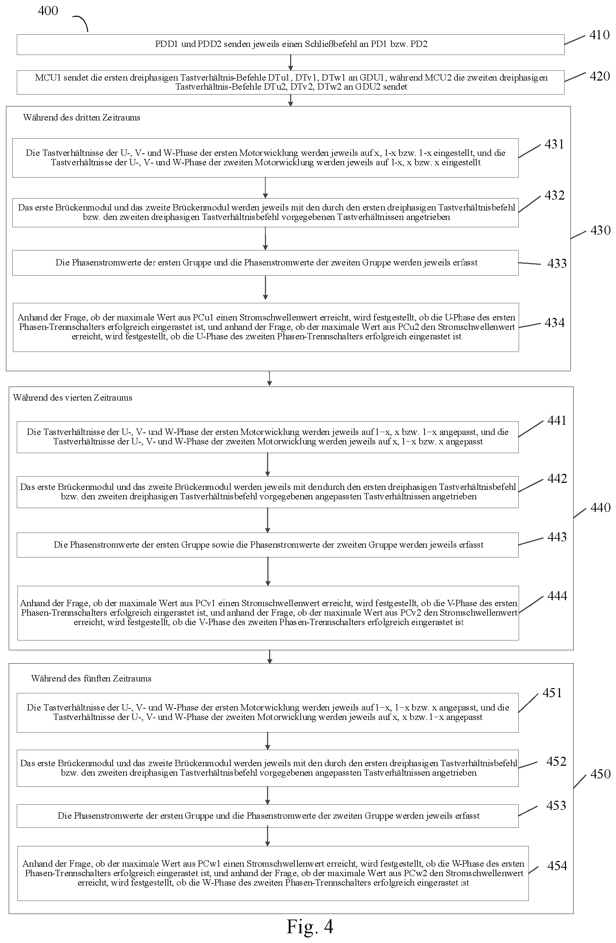

Nachfolgend werden der Abschalt-Selbsttest und der Schließ-Selbsttest anhand von Fig. 3 und Fig. 4 näher erläutert.

Fig. 3 zeigt einen Abschalt-Selbsttestprozess 300 des Phasen-Trennschalters.

Während des Abschalt-Selbsttests wird für jede der ersten und der zweiten Motorwicklung bestimmt, ob der größte der jeweiligen Phasenstromwerte kleiner als ein Stromschwellenwert ist. Wenn der größte Wert kleiner als der Stromschwellenwert ist, ist das Abschalten erfolgreich; andernfalls liegt ein Abschaltfehler vor.

Der Abschalt-Selbsttestprozess 300 beginnt in Block 310. Dort senden der erste Treiber-IC PDD1 und der zweite Treiber-IC PDD2 jeweils einen Abschaltbefehl an den ersten Phasen-Trennschalter PD1 bzw. den zweiten Phasen-Trennschalter PD2.

In Block 320 sendet die erste Mikrocontroller-Einheit MCU1 erste dreiphasige Tastverhältnis-Befehle DTu1, DTv1 und DTw1 an den ersten Gate-Treiber GDU1, während die zweite Mikrocontroller-Einheit MCU2 zweite dreiphasige Tastverhältnis-Befehle DTu2, DTv2 und DTw2 an den zweiten Gate-Treiber GDU2 sendet. Die ersten Befehle legen die Tastverhältnisse für die U-, V- und W-Phasen der ersten Motorwicklung fest, und die zweiten Befehle legen die Tastverhältnisse für die U-, V- und W-Phasen der zweiten Motorwicklung fest. Für jede entsprechende Phase gilt, dass die Summe der festgelegten Tastverhältnisse gleich 1 ist.

Da die Tastverhältnisse der oberen und unteren Schaltelemente jedes Brückenzweigs komplementär sind, genügt es, ein Tastverhältnis nur für eines der beiden Schaltelemente vorzugeben.

Um ein Gesamtausgangsdrehmoment von null sicherzustellen, wird die Bedingung "Summe der Tastverhältnisse gleich 1" phasenweise über die beiden Wicklungen hinweg eingehalten. Beispielsweise können DTu1, DTv1 und DTw1 auf x, 1-x und 1-x gesetzt werden, während DTu2, DTv2 und DTw2 entsprechend auf 1-x, x und x gesetzt werden, wobei 0≤x≤1 gilt. Der Wert x hängt von der gewünschten Stromhöhe ab; typischerweise gilt 0,5<x≤0,6.

In Block 330 treiben GDU1 und GDU2 die Brückenmodule B61 bzw. B62 gemäß den vorgegebenen Tastverhältnissen während eines ersten Zeitraums an. Während dieses ersten Zeitraums werden die erste Gruppe von Phasenstromwerten PCu1, PCv1 und PCw1 sowie die zweite Gruppe von Phasenstromwerten PCu2, PCv2 und PCw2 erfasst.

In Block 340 werden nach Ablauf des ersten Zeitraums die jeweiligen dreiphasigen Tastverhältnis-Befehle angepasst, wobei die Bedingung beibehalten wird, dass die Summe der Tastverhältnisse entsprechender Phasen gleich 1 bleibt. Beispielsweise können DTu1, DTv1 und DTw1 von x, 1-x und 1-x auf 1-x, x und 1-x geändert werden, während DTu2, DTv2 und DTw2 gleichzeitig von 1-x, x und x auf x, 1-x und x geändert werden.

In Block 350 treiben GDU1 und GDU2 die Brückenmodule B61 bzw. B62 mit den angepassten Tastverhältnissen während eines zweiten Zeitraums an. Während dieses zweiten Zeitraums werden die Phasenstromwerte PCu1', PCv1' und PCw1' sowie PCu2', PCv2' und PCw2' erfasst.

Der erste und der zweite Zeitraum können entsprechend den praktischen Anforderungen festgelegt werden und liegen im Allgemeinen im Bereich von 50 bis 100 Millisekunden einschließlich der Grenzwerte.

In Block 360 wird für die erste Motorwicklung der größte Wert unter PCu1, PCv1, PCw1, PCu1', PCv1' und PCw1' bestimmt. Für die zweite Motorwicklung wird der größte Wert unter PCu2, PCv2, PCw2, PCu2', PCv2' und PCw2' bestimmt.

In Block 370 wird anhand dessen, ob der jeweilige größte Wert den Stromschwellenwert A erreicht, festgestellt, ob PD1 bzw. PD2 erfolgreich abgeschaltet wurde. Erreicht der größte Wert den Stromschwellenwert A, liegt ein Abschaltfehler vor; andernfalls war das Abschalten erfolgreich.

In einer Ausführungsform wird der Stromschwellenwert A auf mindestens das Doppelte des maximalen Null-Offset-Phasenstromwerts unter den Phasen der ersten und der zweiten Motorwicklung festgelegt. In einer anderen Ausführungsform wird A durch einen Stromschwellenwert-Bestimmungsschritt bestimmt: Bei geschlossenem PD1 und PD2 werden die dreiphasigen Tastverhältnisse der ersten und der zweiten Motorwicklung jeweils auf 0,5 gesetzt und anschließend angepasst, bis der tatsächliche entsprechende Phasenstrom auf ein Niveau ansteigt, bei dem das Vorhandensein von Strom eindeutig festgestellt werden kann; der Wert dieses entsprechenden Phasenstroms wird als A festgelegt.

Fig. 4 zeigt einen Schließ-Selbsttestprozess 400 des Phasen-Trennschalters.

Während des Schließ-Selbsttests wird jede Phase der ersten und der zweiten Motorwicklung nacheinander geprüft, wobei die jeweils geprüfte Phase die aktuelle Zielphase ist. Für jede Wicklung wird festgestellt, ob der Stromwert der aktuellen Zielphase den Stromschwellenwert überschreitet. Ist dies der Fall, ist das Schließen dieser Phase erfolgreich; andernfalls liegt ein Schließfehler vor.

Der Schließ-Selbsttestprozess 400 beginnt in Block 410, in dem PDD1 und PDD2 jeweils einen Schließbefehl an PD1 bzw. PD2 senden.

In Block 420 senden MCU1 und MCU2 erneut die dreiphasigen Tastverhältnis-Befehle DTu1, DTv1, DTw1 bzw. DTu2, DTv2, DTw2, wobei wieder die Bedingung eingehalten wird, dass die Summe der Tastverhältnisse entsprechender Phasen gleich 1 ist.

In Block 430 wird U als aktuelle Zielphase verwendet. Während eines dritten Zeitraums werden in Unterblock 431 DTu1, DTv1 und DTw1 für die erste Motorwicklung auf x, 1-x und 1-x gesetzt und DTu2, DTv2 und DTw2 für die zweite Motorwicklung auf 1-x, x und x gesetzt, wobei 0,5<x≤0,6 gilt. In Unterblock 432 treiben GDU1 und GDU2 B61 und B62 mit diesen Tastverhältnissen an. In Unterblock 433 werden die Phasenstromwerte PCu1, PCv1, PCw1 sowie PCu2, PCv2 und PCw2 erfasst. In Unterblock 434 wird anhand dessen, ob PCu1 den Stromschwellenwert A erreicht, bestimmt, ob die U-Phase von PD1 erfolgreich geschlossen wurde; entsprechend wird anhand von PCu2 bestimmt, ob die U-Phase von PD2 erfolgreich geschlossen wurde.

In Block 440 wird V als aktuelle Zielphase verwendet. Während eines vierten Zeitraums werden in Unterblock 441 DTu1, DTv1 und DTw1 auf 1-x, x und 1-x angepasst und DTu2, DTv2 und DTw2 auf x, 1-x und x angepasst, wobei 0,5<x≤0,6 gilt. In Unterblock 442 werden B61 und B62 entsprechend angesteuert. In Unterblock 443 werden die Phasenstromwerte erfasst. In Unterblock 444 wird anhand dessen, ob PCv1 den Stromschwellenwert A erreicht, bestimmt, ob die V-Phase von PD1 erfolgreich geschlossen wurde; entsprechend wird anhand von PCv2 bestimmt, ob die V-Phase von PD2 erfolgreich geschlossen wurde.

In Block 450 wird W als aktuelle Zielphase verwendet. Während eines fünften Zeitraums werden in Unterblock 451 DTu1, DTv1 und DTw1 auf 1-x, 1-x und x angepasst und DTu2, DTv2 und DTw2 auf x, x und 1-x angepasst, wobei 0,5<x≤0,6 gilt. In Unterblock 452 werden B61 und B62 entsprechend angesteuert. In Unterblock 453 werden die Phasenstromwerte erfasst. In Unterblock 454 wird anhand dessen, ob PCw1 den Stromschwellenwert A erreicht, bestimmt, ob die W-Phase von PD1 erfolgreich geschlossen wurde; entsprechend wird anhand von PCw2 bestimmt, ob die W-Phase von PD2 erfolgreich geschlossen wurde.

Der dritte, vierte und fünfte Zeitraum können jeweils im Bereich von 50 bis 100 Millisekunden einschließlich der Grenzwerte liegen.

Wenn die U-, V- und W-Phasen von PD1 jeweils erfolgreich geschlossen werden, gilt PD1 insgesamt als erfolgreich geschlossen. Entsprechend gilt PD2 als erfolgreich geschlossen, wenn seine U-, V- und W-Phasen jeweils erfolgreich geschlossen werden. Damit ist der Schließ-Selbsttest abgeschlossen.

Auch im Zusammenhang mit dem Schließ-Selbsttest kann der Stromschwellenwert A auf mindestens das Doppelte des maximalen Null-Offset-Phasenstromwerts festgelegt oder durch den oben beschriebenen Bestimmungsschritt ermittelt werden.

In Fig. 4 ist die Reihenfolge U, dann V, dann W als Reihenfolge der aktuellen Zielphasen dargestellt. In anderen Ausführungsformen kann diese Reihenfolge je nach Bedarf verändert werden.

Gemäß den vorstehend beschriebenen Abschalt- und Schließ-Selbsttestprozessen werden Spannungen so angelegt, dass der Motor durch Ausgabe zweier Sätze von Tastverhältnissen Gleichstrom ausgibt, woraufhin Abschaltbefehle an die Phasen-Trennschalter gesendet werden, um festzustellen, ob weiterhin Strom durch die beiden Gruppen von Motorwicklungen fließt. Für jede Phase der Motorwicklungen wird die Summe der von MCU1 und MCU2 ausgegebenen Tastverhältnisse auf 1 gehalten, sodass die beiden Wicklungen gleich große und entgegengesetzt gerichtete Ströme und damit entgegengesetzte Drehmomente erzeugen, die sich gegenseitig aufheben.

Auf diese Weise wird bei einem Gesamtausgangsdrehmoment des Motors von null eine Selbstprüfung der Phasen-Trennschalter in einem doppelt redundanten elektrischen Servolenkungssystem realisiert. Zusätzlich werden bei jeder Gruppenselbstprüfung abwechselnd zwei Sätze von Tastverhältnissen ausgegeben, sodass zwei der drei Phasen nacheinander ihre Stromrichtung ändern, wodurch Auslassungen beim Abschalt-Selbsttest verhindert werden.

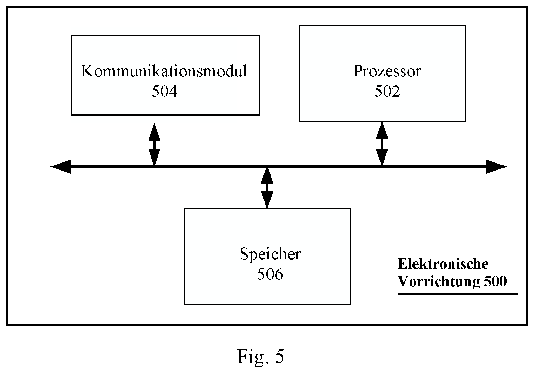

Fig. 5 zeigt ein schematisches Blockdiagramm einer in einem Fahrzeug verwendeten elektronischen Vorrichtung 500. In einigen Ausführungsformen umfasst die elektronische Vorrichtung 500 einen Prozessor 502, ein Kommunikationsmodul 504 und einen Speicher 506, die jeweils direkt oder indirekt elektrisch miteinander verbunden sein können, um Daten zu übertragen oder auszutauschen, beispielsweise über eine oder mehrere Kommunikationsbusse oder Signalleitungen.

Der Prozessor 502 kann ohne Beschränkung beispielsweise eine CPU, GPU, einen Netzwerkprozessor NP, einen digitalen Signalprozessor DSP, eine anwendungsspezifische integrierte Schaltung ASIC, ein feldprogrammierbares Gate-Array FPGA oder eine andere programmierbare Logikeinheit sowie diskrete Logikbauteile oder diskrete Hardwarekomponenten umfassen.

Das Kommunikationsmodul 504 dient der drahtgebundenen oder drahtlosen Kommunikation mit relevanten Einrichtungen außerhalb des Fahrzeugs und/oder mit anderen Einrichtungen innerhalb des Fahrzeugs.

Der Speicher 506 kann ohne Beschränkung RAM, ROM, PROM, EPROM, EEPROM oder dergleichen umfassen und verschiedene Programme speichern, die vom Prozessor 502 ausgeführt werden, sowie Zwischenvariablen und Endergebnisse, die bei der Programmausführung durch den Prozessor 502 entstehen. Beispielsweise kann der Speicher 506 maschinenlesbare Anweisungen speichern, die, wenn sie vom Prozessor 502 ausgeführt werden, die in Fig. 2 bis Fig. 4 dargestellten Abschalt- und Schließ-Selbsttestprozesse des Phasen-Trennschalters implementieren.

Die in Fig. 5 dargestellte Struktur dient lediglich als Beispiel. Die elektronische Vorrichtung 500 kann mehr oder weniger Komponenten als dargestellt aufweisen. Die in Fig. 5 gezeigten Komponenten können in Hardware, Software oder einer geeigneten Kombination davon realisiert werden.

Die Erfindung kann in anderen konkreten Formen verwirklicht werden, ohne ihren Geist und ihre wesentlichen Merkmale zu verlassen. Beispielsweise können die in bestimmten Ausführungsformen beschriebenen Algorithmen modifiziert werden, ohne den grundlegenden Geist der Systemarchitektur zu verlassen. Daher sind die vorliegenden Ausführungsformen in jeder Hinsicht als beispielhaft und nicht einschränkend anzusehen. Der Schutzumfang der Erfindung wird durch die beigefügten Ansprüche und nicht durch die vorstehende Beschreibung definiert, und alle Änderungen, die in Bedeutung und Äquivalenzbereich der Ansprüche fallen, sollen von der Erfindung umfasst sein.

## Patentansprüche

1. Selbsttest-Steuerverfahren für einen Phasen-Trennschalter, anwendbar auf ein doppelt redundantes elektrisches Servolenkungssystem in einem Fahrzeug, wobei das doppelt redundante elektrische Servolenkungssystem eine erste Motorwicklung und eine zweite Motorwicklung umfasst, umfassend:
einen Koordinationsschritt zum koordinierten Ansteuern der ersten Motorwicklung und der zweiten Motorwicklung derart, dass ein Gesamtausgangsdrehmoment der ersten Motorwicklung und der zweiten Motorwicklung null ist; und
einen Selbstprüfungsschritt für den Phasen-Trennschalter zum Ansteuern der Phasen-Trennschalter jeder Phase der ersten Motorwicklung und der zweiten Motorwicklung, um auf der Grundlage jeweiliger Phasenstromwerte eine Selbstprüfung durchzuführen.

2. Verfahren nach Anspruch 1, wobei der Koordinationsschritt ein koordiniertes Einstellen von Tastverhältnissen der ersten Motorwicklung und der zweiten Motorwicklung umfasst, derart, dass das Gesamtausgangsdrehmoment der ersten Motorwicklung und der zweiten Motorwicklung null ist.

3. Verfahren nach Anspruch 2, wobei die Selbstprüfung des Phasen-Trennschalters einen Abschalt-Selbsttest und/oder einen Schließ-Selbsttest umfasst und wobei der Selbstprüfungsschritt für den Phasen-Trennschalter umfasst:
gleichzeitiges Abschalten/Schließen der Phasen-Trennschalter jeder Phase der ersten Motorwicklung und der zweiten Motorwicklung;
Erfassen der Phasenstromwerte der ersten Motorwicklung und der zweiten Motorwicklung;
während des Abschalt-Selbsttests für jede der ersten Motorwicklung und der zweiten Motorwicklung Feststellen, ob der größte ihrer Phasenstromwerte kleiner als ein Stromschwellenwert ist, und, wenn der größte Wert kleiner als der Stromschwellenwert ist, Feststellen, dass das Abschalten erfolgreich ist, andernfalls Feststellen eines Abschaltfehlers; und
während des Schließ-Selbsttests sequentielles Durchführen eines Schließ-Selbsttests für jede Phase unter den drei Phasen der ersten Motorwicklung und der zweiten Motorwicklung, wobei die aktuell einer Selbstprüfung unterzogene Phase eine aktuelle Zielphase ist, und für jede der ersten Motorwicklung und der zweiten Motorwicklung Feststellen, ob der Stromwert ihrer aktuellen Zielphase größer als der Stromschwellenwert ist; wenn der Stromwert der aktuellen Zielphase größer als der Stromschwellenwert ist, Feststellen, dass das Schließen der aktuellen Zielphase erfolgreich ist, andernfalls Feststellen eines Schließfehlers der aktuellen Zielphase.

4. Verfahren nach Anspruch 3, wobei während des Abschalt-Selbsttests der Koordinationsschritt umfasst:
Ansteuern der ersten Motorwicklung und der zweiten Motorwicklung gemäß einem ersten Satz dreiphasiger Tastverhältnisse und Aufrechterhalten hiervon über einen ersten Zeitraum, wobei der erste Satz dreiphasiger Tastverhältnisse derart ist, dass für jede Phase der ersten Motorwicklung die Summe ihres Tastverhältnisses und des Tastverhältnisses der entsprechenden Phase der zweiten Motorwicklung 1 ist; und
Ansteuern der ersten Motorwicklung und der zweiten Motorwicklung gemäß einem zweiten Satz dreiphasiger Tastverhältnisse und Aufrechterhalten hiervon über einen zweiten Zeitraum, wobei sich der zweite Satz dreiphasiger Tastverhältnisse von dem ersten Satz dreiphasiger Tastverhältnisse unterscheidet, jedoch weiterhin derart ist, dass für jede Phase der ersten Motorwicklung die Summe ihres Tastverhältnisses und des Tastverhältnisses der entsprechenden Phase der zweiten Motorwicklung 1 ist;
und wobei der Selbstprüfungsschritt für den Phasen-Trennschalter umfasst:
während des ersten Zeitraums jeweiliges Erfassen erster Sätze von Phasenstromwerten der ersten Motorwicklung und der zweiten Motorwicklung;
während des zweiten Zeitraums jeweiliges Erfassen zweiter Sätze von Phasenstromwerten der ersten Motorwicklung und der zweiten Motorwicklung; und
für jede der ersten Motorwicklung und der zweiten Motorwicklung Bestimmen des größten Werts unter den ersten und zweiten Sätzen von Phasenstromwerten als maximalen Phasenstromwert.

5. Verfahren nach Anspruch 4, wobei in dem ersten Satz dreiphasiger Tastverhältnisse die Tastverhältnisse für die drei Phasen der ersten Motorwicklung x, 1-x und 1-x sind und in dem zweiten Satz dreiphasiger Tastverhältnisse die Tastverhältnisse für die drei Phasen der ersten Motorwicklung 1-x, x und 1-x sind, wobei 0,5<x≤0,6 gilt.

6. Verfahren nach Anspruch 4, wobei der erste Zeitraum und der zweite Zeitraum jeweils innerhalb eines Bereichs von 50 bis 100 Millisekunden liegen.

7. Verfahren nach Anspruch 3, wobei während des Schließ-Selbsttests der Koordinationsschritt umfasst:
Koordinieren der Tastverhältnisse der ersten Motorwicklung und der zweiten Motorwicklung derart, dass das Tastverhältnis der aktuellen Zielphase der ersten Motorwicklung x beträgt, die Tastverhältnisse der beiden anderen Phasen der ersten Motorwicklung jeweils 1-x betragen, das Tastverhältnis der aktuellen Zielphase der zweiten Motorwicklung 1-x beträgt und die Tastverhältnisse der beiden anderen Phasen der zweiten Motorwicklung jeweils x betragen, wobei 0,5<x≤0,6 gilt; und
Ansteuern der ersten Motorwicklung und der zweiten Motorwicklung gemäß den eingestellten Tastverhältnissen über einen vorbestimmten Zeitraum;
und wobei der Selbstprüfungsschritt für den Phasen-Trennschalter umfasst: während des vorbestimmten Zeitraums jeweiliges Erfassen von Stromwerten der aktuellen Zielphase der ersten Motorwicklung und der zweiten Motorwicklung.

8. Verfahren nach Anspruch 7, wobei der vorbestimmte Zeitraum innerhalb eines Bereichs von 50 bis 100 Millisekunden liegt.

9. Verfahren nach einem der Ansprüche 3 bis 8, wobei der Stromschwellenwert mindestens das Doppelte eines maximalen Null-Offset-Phasenstromwerts unter den Phasen der ersten Motorwicklung und der zweiten Motorwicklung ist.

10. Verfahren nach einem der Ansprüche 3 bis 8, ferner umfassend einen Stromschwellenwert-Bestimmungsschritt, wobei der Stromschwellenwert-Bestimmungsschritt umfasst:
Setzen dreiphasiger Tastverhältnisse der ersten Motorwicklung und der zweiten Motorwicklung jeweils auf 0,5;
Anpassen der dreiphasigen Tastverhältnisse der ersten Motorwicklung und der zweiten Motorwicklung, bis ein tatsächlicher entsprechender Phasenstrom auf ein Niveau ansteigt, bei dem das Vorhandensein von Strom eindeutig festgestellt werden kann; und
Bestimmen des Werts des entsprechenden Phasenstroms als Stromschwellenwert.
